# EUROPEAN PATENT SPECIFICATION

(11) **EP 4 480 615 B1**
(45) Date of publication and mention of the grant of the patent: **19.08.2026**
(21) Application number: 23752977.1
(22) Date of filing: 13.02.2023
(51) Int. Cl.: B23K 1/00, B23K 3/00, F28D 9/00, F25B 41/42, B23K 1/008, B23K 1/19, B23K 1/20, B23K 101/14

(54) **METHOD FOR PRODUCING REFRIGERANT CHANNEL MODULE, REFRIGERANT CHANNEL MODULE, AND AIR CONDITIONER**
VERFAHREN ZUR HERSTELLUNG EINES KÄLTEMITTELKANALMODULS, KÄLTEMITTELKANALMODUL UND KLIMAANLAGE
PROCÉDÉ DE PRODUCTION D'UN MODULE DE CANAL DE FLUIDE FRIGORIGÈNE, MODULE DE CANAL DE FLUIDE FRIGORIGÈNE ET CLIMATISEUR

(30) Priority: 14.02.2022 JP 2022020289
(43) Date of publication of application: 25.12.2024
(73) Proprietor: DAIKIN INDUSTRIES, LTD., Osaka-shi, Osaka 530-0001 (JP)
(72) Inventor: HAMADATE, Junichi, Osaka-shi, Osaka 530-0001 (JP); KOIKE, Fumiaki, Osaka-shi, Osaka 530-0001 (JP); KINOSHITA, Atsushi, Osaka-shi, Osaka 530-0001 (JP); YAKURA, Naritaka, Osaka-shi, Osaka 530-0001 (JP); KOMAKI, Ayumi, Osaka-shi, Osaka 530-0001 (JP); ONO, Asahi, Osaka-shi, Osaka 530-0001 (JP)
(74) Representative: Hoffmann Eitle
(86) International application number: PCT/JP2023/004832
(87) International publication number: WO 2023/153515

(56) References cited:
- EP-A1- 0 471 865
- DE-A1- 102005 030 438
- JP-A- 2003 161 591
- JP-A- 2006 125 830
- JP-A- 2018 066 536
- JP-A- H0 979 616
- JP-A- H03 249 332
- JP-A- H08 267 128
- JP-A- H1 017 966
- KR-A- 20140 077 272
- US-A- 5 450 997

## Description

### TECHNICAL FIELD

The present invention relates to a method for manufacturing a refrigerant flow path module, a refrigerant flow path module, and an air conditioner.

### BACKGROUND ART

JP 2008098484 A discloses a technique of joining a plurality of metal plates. In this technique, a brazing material is attached to a stacking surface of a plurality of metal plates to be stacked and brazed by heating in a furnace. JP 2008098484 A also discloses forming a dowel that protrudes from a surface on one side of each metal plate and is recessed on a surface on the other side, and caulking and joining by fitting the dowels of the overlapped metal plates to each other.

KR 2014 0077272 A (describing the preamble of claims 1 and 5) shows a heat sink for preventing overheating of a battery provided in an electric vehicle. The heat sink structure is for cooling heat generated from a plurality of battery cells, wherein the heat sink structure comprises an upper plate disposed to be in direct contact with the plurality of battery cells; a lower plate disposed at a lower side spaced apart from the upper plate; a middle plate disposed between the upper plate and the lower plate and having a cooling water circulation passage through which cooling water flows, connected to an inlet side of the cooling water circulation passage formed in the middle plate, and cooling water is introduced into the lower plate; and a fastening member for fastening the upper plate and the lower plate and the middle plate. KR 2014 0077272 A forms the basis for the preamble of claims 1 and 5.

US 5,450,997 A discloses an apparatus for holding a heat exchanger core during a manufacturing process. The core includes a first and second side support member disposed on opposite sides of an assembly of a plurality of interleaved tubes and fins. The apparatus comprises a pair of elongated rod members, releasably engaging locating apertures of the first and second side support members in an overlapping, crosswise relationship. The rod members apply constant compressive force between the side support members to hold the plurality of tube and fins together during the manufacturing process and prevent the heat exchanger core from skewing.

### SUMMARY OF THE INVENTION

### [TECHNICAL PROBLEM]

In a known refrigeration apparatus including a refrigerant circuit for carrying out a vapor compression refrigeration cycle operation, a plurality of refrigerant pipes through which a refrigerant flows has been integrated into one unit in order to reduce the size of the refrigerant circuit. This unit is manufactured, for example, by overlapping and joining a plurality of plates. It is therefore conceivable to apply the technique described in JP 2008098484 A to joining these plates. However, if the plates are warped or the like, a gap between the plates facing each other becomes large, and it becomes difficult for the brazing material to penetrate into the entire space between the plates. It is difficult to reduce the gap between the plates only by fitting with the dowels described in JP 2008098484 A.

An object of the present invention is to provide a method for manufacturing a refrigerant flow path module, a refrigerant flow path module, and an air conditioner capable of appropriately joining first and second plates by brazing.

### [SOLUTION TO PROBLEM]

The method of the present invention is defined by claim 1. The refrigerant flow path module of the present invention is defined by claim 5. The air conditioner of the present invention is defined by claim 6. Dependent claims are related to optional features and particular embodiments.

According to the method of the present invention, by fastening the first and second plates with the fastening member, even if the first plate or the second plate is warped, the gap between the first plate or the second plate can be reduced, and the brazing material can be penetrated between the first and second plates to appropriately join the first and second plates together.

When a minute space communicating with the outside is formed between the fastening member and the hole into which the fastening member is inserted, there is a possibility that moisture entering the minute space freezes and expands to damage the refrigerant flow path module. Therefore, by forming the hole or the groove that opens the hole into which the fastening member is inserted to the outer peripheral edge of the first plate or the second plate, it is possible to suppress accumulation of water in the minute space and to suppress damage to the refrigerant flow path module.

A thermal expansion coefficient of a material of the fastening member is preferably smaller than a thermal expansion coefficient of a material of the first plate and the second plate.

In this configuration, the thermal expansion of the first and second plates is larger than the thermal expansion of the fastening member when heated in the furnace, and the gap between the first and second plates can be further reduced.

A ratio of the thermal expansion coefficient of the material of the fastening member to the thermal expansion coefficient of the material of the first plate and the second plate is preferably from 0.5 to 0.8.

The fastening member preferably has a screw groove, and
the method preferably further includes setting a brazing material to enter the screw groove.

In this configuration, when a minute space communicating with the outside is formed in the screw groove of the fastening member, there is a possibility that moisture entering the minute space freezes and expands to damage the refrigerant flow path module. It is therefore possible to suppress formation of a minute space by entering the brazing material into the screw groove in a manufacturing step.

According to the refrigerant flow path module of the present invention and defined in claim 5, by fastening the first and second plates with the fastening member, the gap between the first plate or the second plate can be reduced, and the brazing material can spread between the first and second plates to appropriately join the first and second plates together.

When a minute space communicating with the outside is formed between the fastening member and the hole into which the fastening member is inserted, there is a possibility that moisture entering the minute space freezes and expands to damage the refrigerant flow path module. Therefore, by forming the hole or the groove that opens the hole into which the fastening member is inserted to the outer peripheral edge of the first plate or the second plate, it is possible to suppress accumulation of water in the minute space and to suppress damage to the refrigerant flow path module.

According to the present invention, an air conditioner is defined in claim 6, and includes the refrigerant flow path module as defined in claim 5.

### BRIEF DESCRIPTION OF DRAWINGS

FIG. 1 is a perspective view of a refrigerant flow path module according to a first embodiment of the present invention.
FIG. 2 is a plan view of the refrigerant flow path module.
FIG. 3 is a front view of the refrigerant flow path module.
FIG. 4 is an enlarged sectional view illustrating a portion where plates are fastened by a fastening member.
FIG. 5 is an exploded front view of the refrigerant flow path module.
FIG. 6 is a front view illustrating a state in which a brazing material is set in the fastening member.
FIG. 7 is an enlarged sectional view illustrating a portion where plates are fastened by a fastening member according to a second embodiment.
FIG. 8 is a sectional view taken along line A-A of FIG. 7.
FIG. 9 is an enlarged sectional view illustrating a portion where plates are fastened by a fastening member according to a third embodiment.
FIG. 10 is an enlarged sectional view illustrating a portion where plates are fastened by a fastening member according to a fourth embodiment.
FIG. 11 is a plan view illustrating an inside of an air conditioner according to an embodiment of the present invention.

### DETAILED DESCRIPTION

Embodiments of the present invention will be described in detail hereinafter with reference to the accompanying drawings.

### [First embodiment]

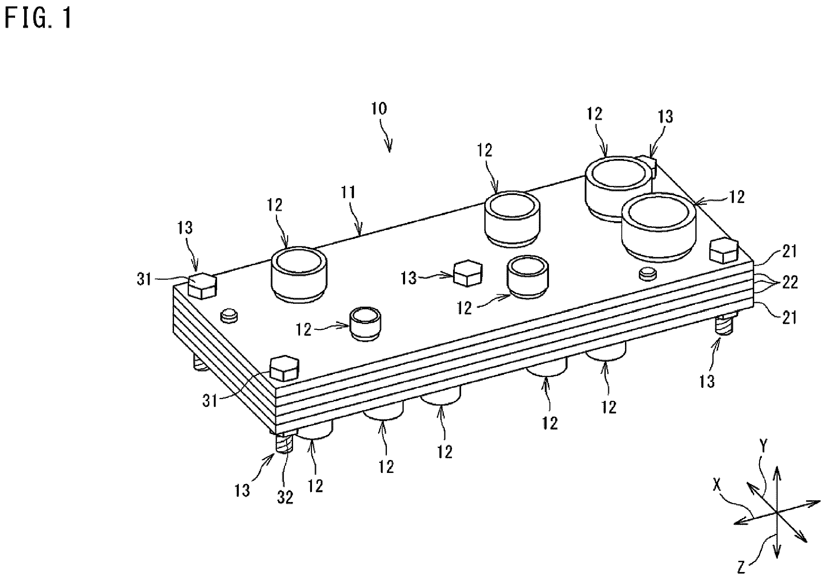

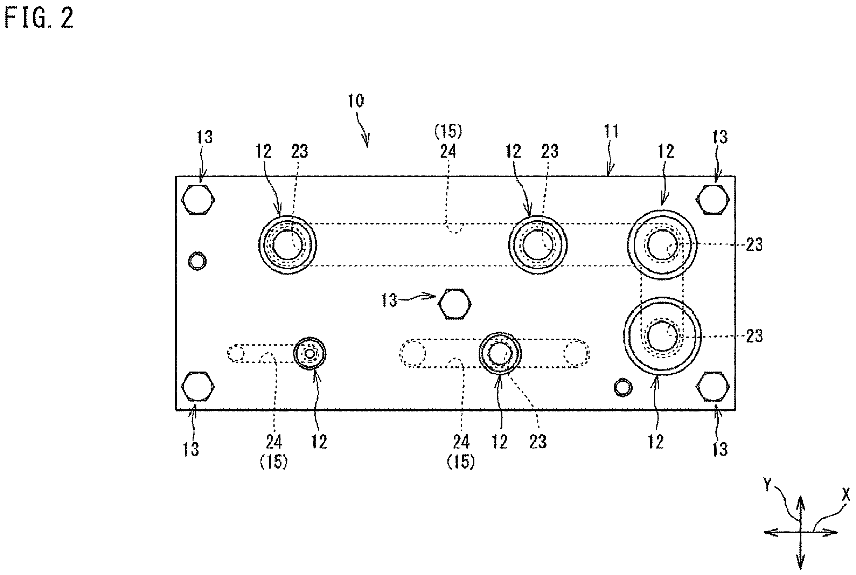

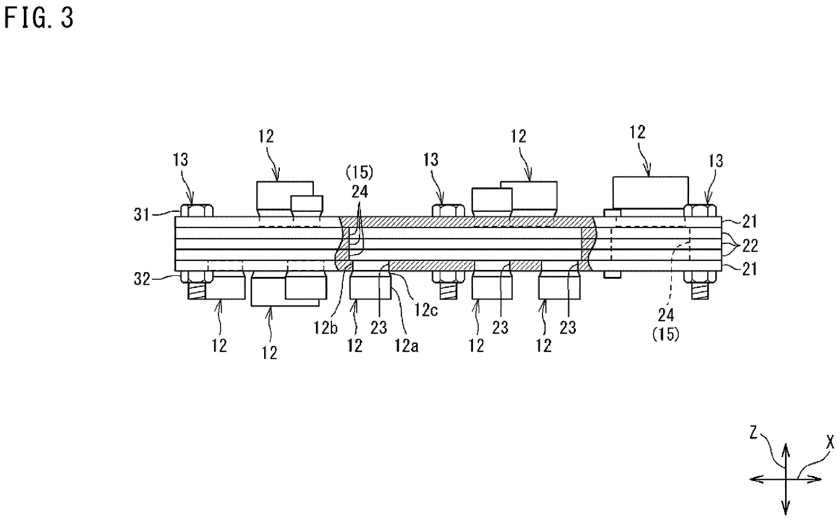

FIG. 1 is a perspective view of a refrigerant flow path module according to a first embodiment of the present invention. FIG. 2 is a plan view of the refrigerant flow path module. FIG. 3 is a front view of the refrigerant flow path module.

A refrigerant flow path module 10 according to the present embodiment is applied to, for example, an air conditioner including a refrigerant circuit that carries out a vapor compression refrigeration cycle operation. Devices such as a four-way switching valve, an electromagnetic valve, a compressor, an accumulator, and an oil separator that constitute the refrigerant circuit are connected to the refrigerant flow path module 10.

The refrigerant flow path module 10 includes a module body 11, a coupling pipe (refrigerant pipe) 12, and a fastening member 13. The module body 11 includes a flow path 15 (see FIGs. 2 and 3) through which a refrigerant flows inside. The module body 11 includes a plurality of plates 21 and 22. The plurality of plates 21 and 22 is stacked and joined to each other. The plates 21 and 22 adjacent to each other are joined by brazing. The module body 11 according to the present embodiment is supported, for example, in a casing of an air conditioner in an orientation in which a plate surface is in a horizontal direction.

The plates 21 and 22 according to the present embodiment include stainless steel. The plates 21 and 22 according to the present embodiment include SUS304L, for example. The plates 21 and 22 have rectangular plate surfaces. In the following description, a direction perpendicular to the plate surfaces of the plates 21 and 22 (normal direction of the plates 21 and 22), in other words, a direction in which the plurality of plates 21 and 22 is stacked is also referred to as a first direction Z. Two directions that are along the plate surfaces of the plates 21 and 22 (directions orthogonal to the first direction Z) and are orthogonal to each other are also referred to as a second direction X and a third direction Y. In the present embodiment, the long sides of the plates 21 and 22 are disposed along the second direction X, and the short sides are disposed along the third direction Y. The shape of the plate surfaces of the plates 21 and 22 is not limited to a rectangle, and may be a square, a polygon other than a quadrangle, a circle including an ellipse and an oval, or the like.

The plurality of plates 21 and 22 have rectangular plate surfaces having the same shape. The plurality of plates 21 and 22 have the same thickness (length in the first direction Z). However, the plurality of plates 21 and 22 may have different rectangular shapes, for example, lengths of long sides or lengths of short sides, or may have different thicknesses.

The plurality of plates 21 and 22 include two end plates 21 disposed at both ends in the first direction Z and an intermediate plate 22 disposed between the two end plates 21. The refrigerant flow path module 10 according to the present embodiment includes three intermediate plates 22. The three intermediate plates 22 are stacked between the end plates 21 at both ends.

As illustrated in FIGs. 2 and 3, each of the end plates 21 is provided with a first opening 23 for attaching the coupling pipe 12. The first opening 23 passes through the end plates 21 in the first direction Z. The first opening 23 has a circular shape.

The intermediate plates 22 are each provided with a second opening 24 constituting the flow path 15 for the refrigerant. The second opening 24 passes through the intermediate plates 22 in the first direction Z. The second opening 24 is long in the second direction X or the third direction Y, or has a circular shape. The shape of the second opening 24 is not limited, and the shape is appropriately set in accordance with a required form of the flow path 15.

As illustrated in FIG. 2, the first opening 23 formed in the end plates 21 is disposed inside the second opening 24 formed in the intermediate plates 22 adjacent to the end plates 21 as viewed in the first direction Z (a direction passing on the sheet of FIG. 2).

The coupling pipe 12 has a substantially cylindrical shape. The coupling pipe 12 includes a material containing copper, for example, copper (pure copper) or a copper alloy. The coupling pipe 12 is disposed to have an axis parallel to the first direction Z. Therefore, the axis of the coupling pipe 12 is perpendicular to the plate surface of the end plate 21.

As illustrated in FIG. 3, the first coupling pipe 12 has a large diameter portion 12a at one end in an axial direction, a small diameter portion 12b at the other end, and a stepped portion 12c in the middle. The large diameter portion 12a and the small diameter portion 12b have a cylindrical shape. The diameter of the large diameter portion 12a is larger than the diameter of the small diameter portion 12b. The stepped portion 12c has a conical shape such that the diameter gradually decreases from the large diameter portion 12a toward the small diameter portion 12b. The small diameter portion 12b of the coupling pipe 12 is inserted into the first opening 23 formed in the end plate 21. An outer peripheral surface of the small diameter portion 12b and the inner peripheral surface of the first opening 23 are bonded by brazing. The "inner peripheral surface of the first opening 23" refers to a surface constituting the first opening 23 of the end plate 21.

For example, a refrigerant pipe constituting the refrigerant circuit of the air conditioner is connected to the large diameter portion 12a of the coupling pipe 12. A port of a component such as a valve constituting the refrigerant circuit may be directly connected to the large diameter portion 12a of the coupling pipe 12.

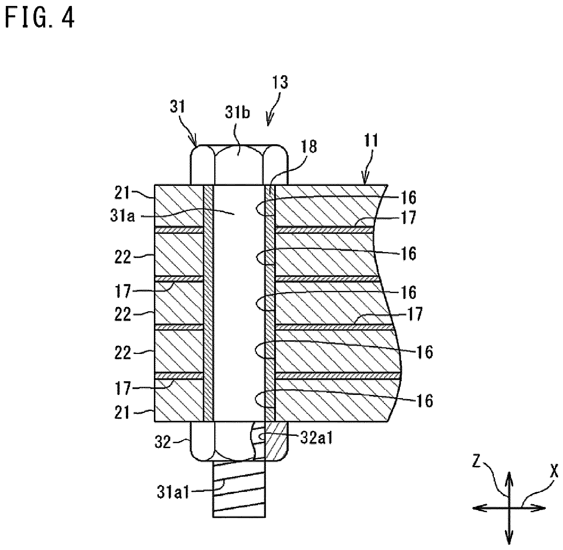

FIG. 4 is an enlarged sectional view illustrating a portion where the plates are fastened by the fastening member.

The fastening member 13 fastens the plurality of plates 21 and 22 to each other. The fastening member 13 includes stainless steel. The fastening member 13 includes SUS430, for example. The fastening member 13 includes a bolt 31 and a nut 32. The bolt 31 is, for example, a hexagonal bolt, and has a shaft 31a and a head 31b. The shaft 31a has a columnar shape. The head 31b is formed at one end of the shaft 31a in a longitudinal direction. An outer peripheral surface of the head 31b has a hexagonal shape. A screw groove 31a1 is formed in an outer peripheral surface at an end of the shaft 31a on an opposite side of the head 31b.

The nut 32 is, for example, a hexagonal nut. The nut 32 has a cylindrical shape. A screw groove 32a1 is formed in an inner peripheral surface of the nut 32. The screw groove 32a1 of the nut 32 can be engaged with the screw groove 31a1 of the bolt 31.

An insertion hole 16 into which the shaft 31a of the bolt 31 is inserted is formed in the module body 11. The insertion hole 16 passes through the plates 21 and 22 of the module body 11 in the first direction Z. The nut 32 is attached to a tip of the bolt 31 inserted into the insertion hole 16. By engaging the screw groove 31a1 of the bolt 31 with the screw groove 32a1 of the nut 32, the bolt 31 and the nut 32 are coupled to each other. The plurality of plates 21 and 22 is sandwiched between the head 31b of the bolt 31 and the nut 32, and is fastened so as to approach each other in the first direction Z.

As illustrated in FIG. 2, a plurality of fastening members 13 is attached to the module body 11. The plurality of fastening members 13 is attached to a total of five locations including four corners and a substantially central portion of the module body 11. However, the number and position of the fastening members 13 are not limited, and can be appropriately changed. The fastening members 13 are not limited to the bolt 31 and the nut 32, and may be any member as long as the plurality of plates 21 and 22 can be fastened to each other. For example, the fastening members 13 may be rivets.

### (Method for manufacturing refrigerant flow path module)

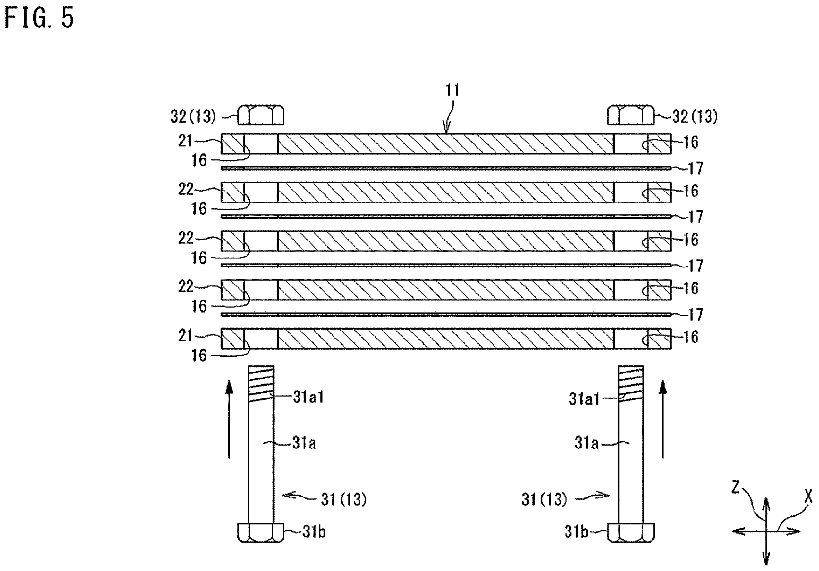

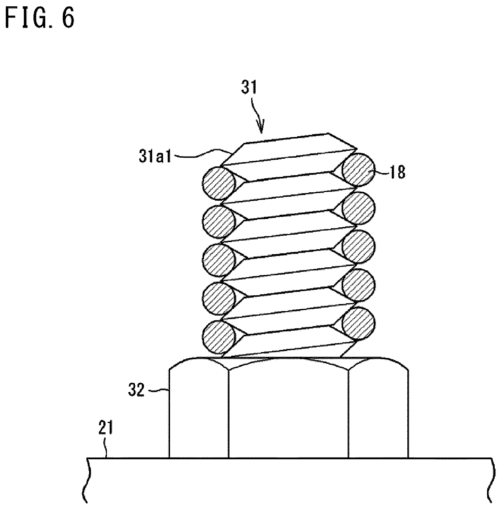

FIG. 5 is an exploded front view of the refrigerant flow path module. FIG. 6 is a front view illustrating a state in which a brazing material is set in the fastening member.

The plurality of plates 21 and 22 constituting the module body 11 is joined by brazing. As the brazing material 17 for brazing the plurality of plates 21 and 22, a brazing material containing copper, for example, bronze brazing is used. In order to manufacture the refrigerant flow path module 10, first, the sheet-shaped brazing material 17 is disposed between the adjacent plates 21 and 22 to be stacked altogether. An insertion hole corresponding to the insertion hole 16 is formed in the sheet-shaped brazing material 17. Thereafter, the shaft 31a of the bolt 31 is inserted into the insertion hole 16 of the stacked plates 21 and 22 and the brazing material 17 from below, the nut 32 is attached to the screw groove 31a1 at an upper end of the shaft 31a, and the plurality of plates 21 and 22 is fastened by the bolt 31and the nut 32. Thereafter, the plates 21 and 22 fastened by the fastening members 13 are put into a brazing furnace and heated. As a result, the brazing material 17 is melted, and the plurality of plates 21 and 22 is joined. As described above, as illustrated in FIG. 4, a brazed portion 17 (denoted by the same reference sign as the brazing material 17) formed by melting the sheet-shaped brazing material 17 is provided between the plurality of plates 21 and 22.

When the adjacent plates 21 and 22 are brazed to each other, an appropriate minute gap (for example, 0.05 mm) needs to be formed in order to allow the brazing material 17 to penetrate between the adjacent plates 21 and 22. However, each of the plates 21 and 22 may be warped by press working or the like in a manufacturing process, and the gap between the plates 21 and 22 may be enlarged by the warpage, and there is a possibility that the brazing material 17 is not appropriately penetrate. In the present embodiment, since the plurality of plates 21 and 22 is fastened by the fastening member 13 before brazing, warpage generated in each of the plates 21 and 22 can be corrected, and a minute gap suitable for brazing can be formed between the adjacent plates 21 and 22.

The fastening member 13 has a thermal expansion coefficient smaller than a thermal expansion coefficient of each of the plates 21 and 22. For example, the thermal expansion coefficient of the fastening member 13 is from 0.5 times to 0.8 times the thermal expansion coefficient of the plates 21 and 22. Therefore, when the plurality of plates 21 and 22 fastened by the fastening member 13 is heated in the furnace, the plates 21 and 22 thermally expand more than the fastening member 13. As a result, the fastening by the fastening member 13 becomes stronger, and the warpage of the plates 21 and 22 can be further corrected.

The fastening member 13 engages a screw groove 31a1 formed in the bolt 31 with the screw groove 32a1 formed in the nut 32 to fasten the plates 21 and 22. A gap called backlash is formed between the screw groove 31a1 of the bolt 31 and the screw groove 32a1 of the nut 32. This gap is a spiral gap communicating with the outside of the refrigerant flow path module 10. When moisture enters such a gap from the outside, there is a possibility that the moisture freezes and expands in an environment with a low outside air temperature to damage the fastening member 13 and the plates 21 and 22.

Similarly, there is a gap between the fastening member 13 and the insertion hole 16 of the module body 11, and there is a possibility that this gap communicates with the outside via the gap between the screw grooves 31a1 and 32a1 described above. An excess of the sheet-like brazing material 17 between the plates 21 and 22 may enter the gap between the fastening member 13 and the insertion hole 16, but not completely fills the gap. Therefore, moisture enters between the fastening member 13 and the insertion hole 16, and there is a possibility that the moisture freezes and expands in an environment with a low outside air temperature to damage the fastening member 13 and the plates 21 and 22.

In order to solve the above disadvantage, the present embodiment includes setting a brazing material to enter the gap before brazing to fill the gap formed in the screw grooves 31a1 and 32a1 of the bolt 31 and the nut 32 with the brazing material. Specifically, as illustrated in FIG. 6, a linear brazing material 18 is wound around a portion of the screw groove 31a1 of the bolt 31 protruding from the nut 32 to set the brazing material. The brazing material 18 enters the gap between the screw groove 31a1 of the bolt 31 and the screw groove 32a1 of the nut 32 by being heated, and fills the gap. The brazing material 18 also enters the gap between the shaft 31a of the bolt 31and the insertion hole 16, and fills the gap together with the excess of the sheet-shaped brazing material 17. Therefore, communication of each gap with the outside is suppressed, and infiltration of moisture is suppressed. The brazing material 18 only needs to be able to fill at least the gap between the screw grooves 31a1 and 32a1, and this can suppress the infiltration of moisture from the outside.

### [Second embodiment]

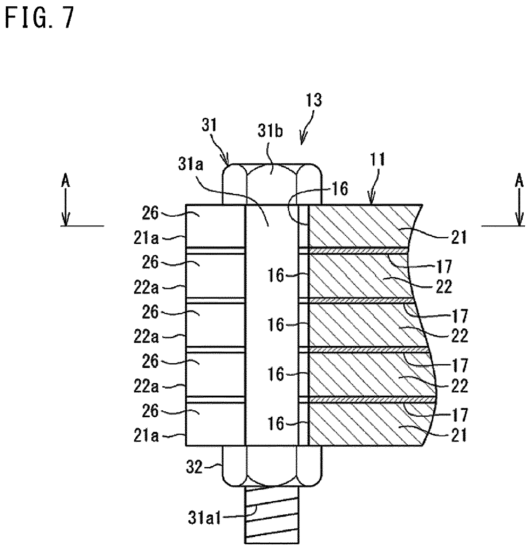

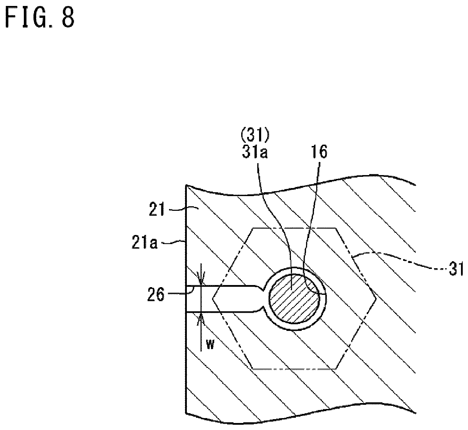

FIG. 7 is an enlarged sectional view illustrating a portion where plates are fastened by a fastening member according to a second embodiment. FIG. 8 is a sectional view taken along line A-A in FIG. 7.

In the second embodiment, each of the plates 21 and 22 of the module body 11 is provided with a groove 26 that opens the insertion hole 16 to outer peripheral edges 21a and 22a of the plates 21 and 22. The groove 26 is formed over the entire thickness of each of the plates 21 and 22. As illustrated in FIG. 8, a width w of the groove 26 is smaller than a diameter of the insertion hole 16. As illustrated in FIG. 7, the grooves 26 of the plates 21 and 22 communicate with each other in the first direction Z.

As illustrated in FIG. 7, the insertion hole 16 of the module body 11 is largely opened to the outside through the groove 26. Therefore, even if a gap communicating with the outside is formed in the screw grooves 31a1 and 32a1 of the bolt 31 and the nut 32, this gap is largely opened to the outside through the groove 26. Therefore, even if moisture enters the gap between the screw grooves 31a1 and 32a1, the moisture is easily discharged to the outside. It is therefore possible to suppress damage to the fastening member 13 and the plates 21 and 22 due to freezing and expansion of the moisture.

The groove 26 is not required to be formed in all the plates 21 and 22, and may be formed in some of the plates. For example, the groove 26 can be formed only in the end plate 21 closest to the screw grooves 31a1 and 32a1, or in the end plate 21 and the intermediate plate 22 adjacent to the end plate 21. Note that the second embodiment and the configuration in which the brazing material 18 enters the screw grooves 31a1 and 32a1 in the first embodiment can be adopted at the same time.

### [Third embodiment]

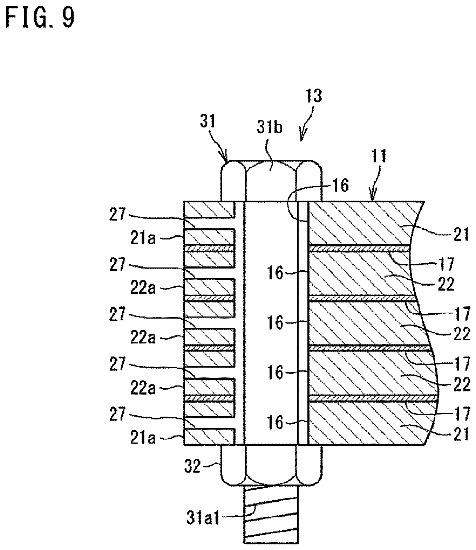

FIG. 9 is an enlarged sectional view illustrating a portion where plates are fastened by a fastening member according to a third embodiment.

In the third embodiment, each of the plates 21 and 22 of the module body 11 is provided with a hole 27 that opens the insertion hole 16 to outer peripheral edges 21a and 22a of the plates 21 and 22. The hole 27 is disposed between one plate surface and the other plate surface of each of the plates 21 and 22 and is closed in the first direction Z. Therefore, the holes 27 of the plates 21 and 22 do not communicate with each other in the first direction Z. Other configurations are similar to the configuration of the second embodiment.

In the present embodiment, as in the second embodiment, even if a gap communicating with the outside is formed in the screw grooves 31a1 and 32a1 of the bolt 31 and the nut 32, this gap is largely opened to the outside through the hole 27. Therefore, even if moisture enters the gap between the screw grooves 31a1 and 32a1, the moisture is easily discharged to the outside. It is therefore possible to suppress damage to the fastening member 13 and the plates 21 and 22 due to freezing and expansion of the moisture.

The hole 27 is not required to be formed in all the plates 21 and 22, and may be formed in some of the plates. For example, the hole 27 may be formed only in the end plate 21 closest to the screw grooves 31a1 and 32a1, or in the end plate 21 and the intermediate plate 22 adjacent to the end plate 21. Note that the third embodiment and the configuration in which the brazing material 18 enters the screw grooves 31a1 and 32a1 in the first embodiment can be adopted at the same time.

### [Fourth embodiment]

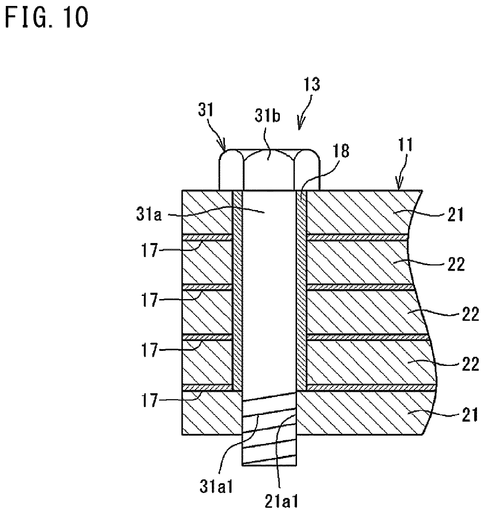

FIG. 10 is an enlarged sectional view illustrating a portion where plates are fastened by a fastening member according to a fourth embodiment.

In the fourth embodiment, the fastening member 13 includes the bolt 31. The screw groove 31a1 of the bolt 31 is engaged with a screw groove 21a1 formed in one end plate (end plate disposed on a lower side in FIG. 10) 21. Therefore, in the present embodiment 21, the end plate 21 is also a constituent element of the fastening member 13. When the refrigerant flow path module 10 according to the present embodiment is brazed, the brazing material 18 is set in the screw groove 31a1 of the bolt 31 protruding from the end plate 21 as illustrated in FIG. 6, and the gap between the screw groove 31a1 of the bolt 31 and the screw groove 21a1 of the end plate 21 can be filled with the brazing material. Other configurations are similar to the configuration of the first embodiment, and functional effects similar to the functional effects of the first embodiment are obtained.

### [Configuration of air conditioner]

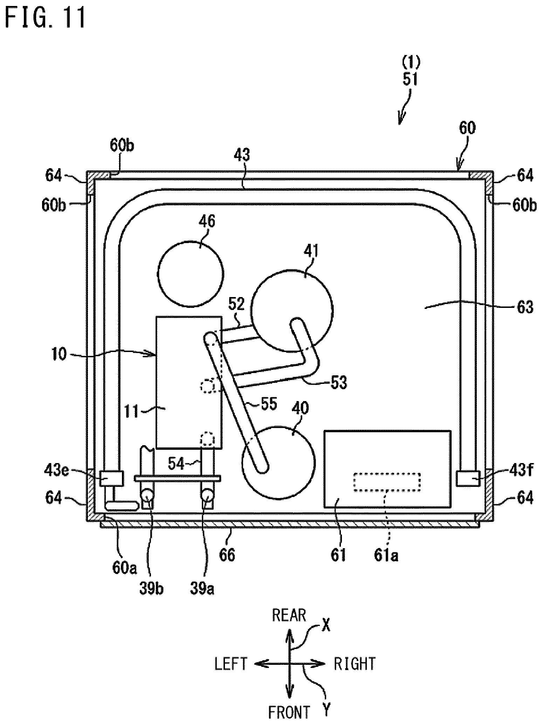

FIG. 11 is a plan view illustrating an inside of an air conditioner according to an embodiment of the present invention.

FIG. 11 illustrates an outdoor unit 51 of an air conditioner 1. The air conditioner 1 is of a separate type and includes an outdoor unit and an indoor unit provided separately from the outdoor unit. The outdoor unit 51 is provided with the refrigerant flow path module 10 described above.

As illustrated in FIG. 11, the outdoor unit 51 includes a casing 60 accommodating components such as a compressor 40, an accumulator 41, an outdoor heat exchanger 43, and an oil separator 46 constituting the refrigerant circuit, an electric component unit 61, and the like. The casing 60 has a substantially rectangular parallelepiped shape. The casing 60 has a bottom plate 63, a support 64, a top panel (not illustrated), a front panel 66, and the like. The bottom plate 63 and the top panel have a quadrilateral shape in a top view. The support 64 is a long member having a substantially L sectional shape and elongating in an up-down direction, and is attached to each of four corners of the bottom plate 63 and the top panel.

The casing 60 has a front surface provided with an opening 60a for maintenance. The opening 60a is closed by the front panel (front side plate) 66. Detaching the front panel 66 from the casing 60 enables maintenance, replacement, and the like of the components in the casing 60 through the opening 60a.

The bottom plate 63 of the casing 60 is provided thereon with the components such as the compressor 40, the accumulator 41, the outdoor heat exchanger 43, and the oil separator 46. The outdoor heat exchanger 43 is disposed corresponding to (facing) three side surfaces of the casing 60, specifically, a left side surface, a right side surface, and a rear side surface of the casing 60. The outdoor heat exchanger 43 has one end provided with a gas header 43e and the other end provided with a liquid header 43f. The left side surface, the right side surface, and the rear side surface of the casing 60 are each provided with an intake port 60b for taking in outdoor air.

The outdoor unit 51 is configured to take in air from the intake port 60b of the casing 60 by driving of a fan (not illustrated), perform heat exchange between the air and the outdoor heat exchanger 43, and then blow out the air upward from an upper part of the casing 60.

The compressor 40 is disposed at a substantially center in a left-right direction Y near the front surface of the casing 60. The electric component unit 61 is disposed near the front surface of the casing 60 and adjacent to a right side of the compressor 40. The accumulator 41 is disposed behind the compressor 40. An oil separator 46 is disposed on a left side of the accumulator 41. The electric component unit 61 includes a controller 61a that controls behavior of the compressor 40, a valve, a fan, and the like.

The outdoor unit 51 is provided with the refrigerant flow path module 10 as described above. The refrigerant flow path module 10 constitutes a part of a flow path of a refrigerant pipe that connects components of a refrigerant circuit such as the compressor 40, the accumulator 41, a flow path switching valve, the outdoor heat exchanger 43, an expansion valve, the oil separator 46, and shutoff valves 39a and 39b.

The refrigerant flow path module 10 is disposed on the left side (one side in the third direction Y) of the compressor 40 and the accumulator 41. The refrigerant flow path module 10 is disposed on a front side (one side in the second direction X) of the oil separator 46. The refrigerant flow path module 10 according to the present embodiment is supported in the casing 60 in an orientation in which the plate surfaces of the plates 21 and 22 (see FIG. 1) constituting the module body 11 are horizontal. For example, the refrigerant flow path module 10 is supported by refrigerant pipes 52 to 55 via the components 39a, 40, 41, and the like of the refrigerant circuit fixed in the casing 60.

### [Functional effects]

(1) The refrigerant flow path module 10 includes a first plate (for example, the end plate 21) and a second plate (for example, the intermediate plate 22) stacked on each other, and includes the refrigerant flow path 15 inside. A method for manufacturing the refrigerant flow path module 10 includes arranging the brazing material 17 between the first plate 21 and the second plate 22, fastening the first plate 21 and the second plate 22 between which the brazing material 17 is disposed with the fastening member 13, and heating the first plate 21 and the second plate 22 fastened by the fastening member 13 in a furnace. In this manner, by fastening the first and second plates 21 and 22 with the fastening member 13, even if the first plate 21 or the second plate 22 is warped, the gap between the first plate 21 or the second plate 22 can be reduced, and the brazing material 17 can be penetrated between the first and second plates 21 and 22 to appropriately join the first and second plates 21 and 22 together.
   The first plate may be either the end plate 21 or the intermediate plate 22, and the second plate may be either the end plate 21 or the intermediate plate 22.
(2) The thermal expansion coefficient of the material of the fastening member 13 is smaller than the thermal expansion coefficient of the material of the first plate 21 and the second plate 22. Specifically, in the above embodiment, a ratio of the thermal expansion coefficient of the material of the fastening member 13 to the thermal expansion coefficient of the material of the first plate 21 and the second plate 22 is from 0.5 to 0.8. Therefore, the thermal expansion of the first and second plates 21 and 22 is larger than the thermal expansion of the fastening member 13 when heated in the furnace, and the gap between the first and second plates 21 and 22 can be further reduced.
(3) The fastening member 13 has the screw grooves 31a1, 32a1, and 21a1, and the method for manufacturing the refrigerant flow path module 10 further includes setting the brazing material 18 to enter the screw grooves 31a1, 32a1, and 21a1. When a minute space communicating with the outside is formed in the portions of the screw grooves 31a1,32a1, and 21a1 of the fastening member 13, there is a possibility that the moisture entering the minute space freezes and expands to damage the fastening member 13 and the first and second plates 21 and 22. It is therefore possible to suppress formation of a minute space by entering the brazing material 18 into the screw grooves 31a1,32a1, and 21a1 in a manufacturing step.

The method for manufacturing the refrigerant flow path module 10 further includes the step of forming the insertion hole 16 into which the fastening member 13 is inserted in the first plate 21 and the second plate 22, and forming the hole 27 or the groove 26 that opens the insertion hole 16 to the outer peripheral edge 21a or 22a of the first plate 21 or the second plate 22 in the first plate 21 or the second plate 22. When a minute space communicating with the outside is formed between the fastening member 13 and the insertion hole 16 into which the fastening member 13 is inserted, there is a possibility that moisture entering the minute space freezes and expands to damage the refrigerant flow path module 10. Therefore, by forming the hole 27 or the groove 26 that opens the insertion hole 16 into which the fastening member 13 is inserted to the outer peripheral edge 21a or 22a of the first plate 21 or the second plate 22, it is possible to suppress accumulation of water in the minute space and to suppress damage to the refrigerant flow path module 10.

(5) The refrigerant flow path module 10 includes a first plate (for example, the end plate 21) and a second plate (for example, the intermediate plate 22) stacked on each other, and includes the refrigerant flow path 15 inside. The refrigerant flow path module 10 includes the brazed portion 17 (formed by melting the sheet-shaped brazing material 17) provided between the first plate 21 and the second plate 22, and a fastening member 13 that fastens the first plate 21 and the second plate 22. In this manner, by fastening the first and second plates 21 and 22 with the fastening member 13, the warpage generated in the first plate 21 and the second plate 22 is corrected, the gap between the first plate 21 or the second plate 22 can be reduced, and the brazing material 17 can be penetrated between the first and second plates 21 and 22 to appropriately join the first and second plates 21 and 22 together.

(6) The insertion hole 16 into which the fastening member 13 is inserted is formed in the first plate 21 and the second plate 22, and the hole 27 or the groove 26 that opens the insertion hole 16 to the outer peripheral edge 21a or 22a of the first plate 21 or the second plate 22 is formed in the first plate 21 or the second plate 22. When a minute space communicating with the outside is formed between the fastening member 13 and the insertion hole 16 into which the fastening member 13 is inserted, there is a possibility that moisture entering the minute space freezes and expands to damage the refrigerant flow path module. Therefore, by forming the hole 27 or the groove 26 that opens the insertion hole 16 into which the fastening member 13 is inserted to the outer peripheral edge 21a or 22a of the first plate 21 or the second plate 22, it is possible to suppress accumulation of water in the minute space and to suppress damage to the refrigerant flow path module.

The present invention should not be limited to the above exemplification, but is intended to include any modification which are falling under the scope of protection conferred by the appended claims.

For example, the number of plates constituting the module body is not limited to the above embodiments, and the module body only needs to include at least two plates (the first plate and the second plate).

### REFERENCE SIGNS LIST

- 10: refrigerant flow path module
- 13: fastening member
- 15: flow path
- 16: insertion hole
- 17: brazing material
- 18: brazing material
- 21: end plate
- 21a: outer peripheral edge
- 21a1: screw groove
- 22: intermediate plate
- 22a: outer peripheral edge
- 26: groove
- 27: hole
- 31a1: screw groove
- 32a1: screw groove

## Claims

1. A method for manufacturing a refrigerant flow path module (10) including a first plate (21 or 22) and a second plate (21 or 22) stacked on each other and including a refrigerant flow path (15) inside, the method comprising:
forming an insertion hole (16) into which a fastening member (13) is inserted in the first plate (21 or 22) and the second plate (21 or 22);
the method being **characterised by** the following:
forming, in the first plate (21, 22) or the second plate (22, 21), a groove (26) or a hole (27) that opens the insertion hole (16) to an outer peripheral edge (21a, 22a) of the first plate (21, 22) or the second plate (22, 21);
arranging a brazing material (17) between the first plate (21, 22) and the second plate (22, 21);
fastening the first plate (21, 22) and the second plate (22, 21) between which the brazing material (17) is disposed with the fastening member (13); and
heating the first plate (21, 22) and the second plate (22, 21) fastened by the fastening member (13) in a furnace.

2. The method for manufacturing a refrigerant flow path module according to claim 1, wherein a thermal expansion coefficient of a material of the fastening member (13) is smaller than a thermal expansion coefficient of a material of the first plate (21, 22) and the second plate (22, 21).

3. The method for manufacturing a refrigerant flow path module according to claim 2, wherein a ratio of the thermal expansion coefficient of the material of the fastening member (13) to the thermal expansion coefficient of the material of the first plate (21, 22) and
the second plate (22, 21) is from 0.5 to 0.8.

4. The method for manufacturing a refrigerant flow path module according to any one of claims 1 to 3, wherein
the fastening member (13) has a screw groove (31a1, 32a1), and
the method further includes setting a brazing material (18) to enter the screw groove (31a1, 32a1).

5. A refrigerant flow path module including a first plate (21, 22) and a second plate (22, 21) stacked on each other and including a refrigerant flow path (15) inside, the refrigerant flow path module comprising:
a brazed portion (17) provided between the first plate (21, 22) and the second plate (22, 21); and
a fastening member (13) that fastens the first plate (21, 22) and the second plate (22, 21);
wherein the first plate (21, 22) and the second plate (22, 21) is provided with an insertion hole (16) into which the fastening member (13) is inserted;
**characterized in that**
the first plate (21, 22) or the second plate (22, 21) is provided with a groove (26) or a hole (27) that opens the insertion hole (16) to an outer peripheral edge (21a, 22a) of the first plate (21, 22) or the second plate (22, 21).

6. An air conditioner comprising the refrigerant flow path module according to claim 5.

## Patentansprüche

1. Verfahren zur Herstellung eines Kältemittelströmungswegmoduls (10), das eine erste Platte (21 oder 22) und eine zweite Platte (21 oder 22) einschließt, die aufeinandergestapelt sind und innen einen Kältemittelströmungsweg (15) einschließen, das Verfahren umfassend:
Ausbilden eines Einstecklochs (16), in das ein Befestigungselement (13) in der ersten Platte (21 oder 22) und der zweiten Platte (21 oder 22) eingesteckt wird;
wobei das Verfahren durch Folgendes gekennzeichnet ist:
Ausbilden, in der ersten Platte (21, 22) oder der zweiten Platte (22, 21), einer Nut (26) oder eines Lochs (27), die bzw. das das Einsteckloch (16) zu einer Außenumfangskante (21a, 22a) der ersten Platte (21, 22) oder der zweiten Platte (22, 21) öffnet;
Anordnen eines Lötmaterials (17) zwischen der ersten Platte (21, 22) und der zweiten Platte (22, 21);
Befestigen der ersten Platte (21, 22) und der zweiten Platte (22, 21), zwischen denen das Lötmaterial (17) angeordnet ist, mit dem Befestigungselement (13); und
Erhitzen der ersten Platte (21, 22) und der zweiten Platte (22, 21), die durch das Befestigungselement (13) befestigt sind, in einem Ofen.

2. Verfahren zur Herstellung eines Kältemittelströmungswegmoduls nach Anspruch 1, wobei ein Wärmeausdehnungskoeffizient eines Materials des Befestigungselements (13) kleiner ist als ein Wärmeausdehnungskoeffizient eines Materials der ersten Platte (21, 22) und der zweiten Platte (22, 21).

3. Verfahren zur Herstellung eines Kältemittelströmungswegmoduls nach Anspruch 2, wobei ein Verhältnis des Wärmeausdehnungskoeffizienten des Materials des Befestigungselements (13) zu dem Wärmeausdehnungskoeffizienten des Materials der ersten Platte (21, 22) und der zweiten Platte (22, 21) von 0,5 bis 0,8 ist.

4. Verfahren zur Herstellung eines Kältemittelströmungswegmoduls nach einem der Ansprüche 1 bis 3, wobei
das Befestigungselement (13) eine Gewindenut (31a1, 32a1) aufweist, und
wobei das Verfahren weiter einschließt, ein Lötmaterial (18) so zu setzen, dass es in die Gewindenut (31a1, 32a1) eintritt.

5. Kältemittelströmungswegmodul, das eine erste Platte (21, 22) und eine zweite Platte (22, 21) einschließt, die aufeinandergestapelt sind und innen einen Kältemittelströmungsweg (15) einschließen, wobei das Kältemittelströmungswegmodul umfasst:
einen Lötabschnitt (17), der zwischen der ersten Platte (21, 22) und der zweiten Platte (22, 21) vorgesehen ist; und
ein Befestigungselement (13), das die erste Platte (21, 22) und die zweite Platte (22, 21) befestigt;
wobei die erste Platte (21, 22) und die zweite Platte (22, 21) mit einem Einsteckloch (16) versehen sind, in das das Befestigungselement (13) eingesteckt wird;
**dadurch gekennzeichnet, dass**
die erste Platte (21, 22) oder die zweite Platte (22, 21) mit einer Nut (26) oder einem Loch (27) versehen ist, die bzw. das das Einsteckloch (16) zu einer Außenumfangskante (21a, 22a) der ersten Platte (21, 22) oder der zweiten Platte (22, 21) öffnet.

6. Klimaanlage, umfassend das Kältemittelströmungswegmodul nach Anspruch 5.

## Revendications

1. Procédé de fabrication d'un module de canal de fluide frigorigène (10) incluant une première plaque (21 ou 22) et une deuxième plaque (21 ou 22) empilées l'une sur l'autre et incluant un canal de fluide frigorigène (15) à l'intérieur, le procédé comprenant :
la formation d'un trou d'insertion (16) dans lequel un élément de fixation (13) est inséré dans la première plaque (21 ou 22) et la deuxième plaque (21 ou 22) ; le procédé étant **caractérisé par** les étapes suivantes :
la formation, dans la première plaque (21, 22) ou la deuxième plaque (22,21), d'une rainure (26) ou d'un orifice (27) qui ouvre le trou d'insertion (16) vers un bord périphérique externe (21a, 22a) de la première plaque (21, 22) ou de la deuxième plaque (22,21) ;
l'agencement d'un matériau de brasage (17) entre la première plaque (21, 22) et la deuxième plaque (22, 21) ;
la fixation de la première plaque (21, 22) et de la deuxième plaque (22,21) entre lesquelles le matériau de brasage (17) est disposé avec l'élément de fixation (13) ; et
le chauffage de la première plaque (21, 22) et de la deuxième plaque (22,21) fixées par l'élément de fixation (13) dans un four.

2. Procédé de production d'un module de canal de fluide frigorigène selon la revendication 1, dans lequel un coefficient de dilatation thermique d'un matériau de l'élément de fixation (13) est inférieur à un coefficient de dilatation thermique d'un matériau de la première plaque (21, 22) et de la deuxième plaque (22, 21).

3. Procédé de fabrication d'un module de canal de fluide frigorigène selon la revendication 2, dans lequel un rapport du coefficient de dilatation thermique du matériau de l'élément de fixation (13) au coefficient de dilatation thermique du matériau de la première plaque (21, 22) et de la deuxième plaque (22, 21) est de 0,5 à 0,8.

4. Procédé de fabrication d'un module de canal de fluide frigorigène selon l'une quelconque des revendications 1 à 3, dans lequel
l'élément de fixation (13) présente une rainure filetée (31a1, 32a1), et
le procédé inclut en outre la disposition d'un matériau de brasage (18) de manière à le faire entrer dans la rainure filetée (31a1, 32a1).

5. Module de canal de fluide frigorigène incluant une première plaque (21, 22) et une deuxième plaque (22,21) empilées l'une sur l'autre et incluant un canal de fluide frigorigène (15) en son sein, le module de canal de fluide frigorigène comprenant :
une portion brasée (17) fournie entre la première plaque (21, 22) et la deuxième plaque (22,21) ; et
un élément de fixation (13) qui fixe la première plaque (21, 22) et la deuxième plaque (22,21) ;
dans lequel la première plaque (21,22) et la deuxième plaque (22,21) sont munies d'un trou d'insertion (16) dans lequel l'élément de fixation (13) est inséré ; **caractérisé en ce que**
la première plaque (21, 22) ou la deuxième plaque (22,21) est munie d'une rainure (26) ou d'un orifice (27) qui ouvre le trou d'insertion (16) vers un bord périphérique externe (21a, 22a) de la première plaque (21,22) ou de la deuxième plaque (22,21).

6. Climatiseur comprenant le module de canal de fluide frigorigène selon la revendication 5.
